# EUROPÄISCHE PATENTSCHRIFT

(11) **EP 3 281 188 B1**
(45) Veröffentlichungstag und Bekanntmachung des Hinweises auf die Patenterteilung: **26.08.2020**
(21) Anmeldenummer: 16720699.4
(22) Anmeldetag: 30.03.2016
(51) Int. Cl.: G09B 23/30, G01M 7/08, G01L 5/00

(54) **PRÜFTISCH ZUR CRASHTEST-DUMMY-ZERTIFIZIERUNG SOWIE PRÜFSTAND**
TEST TABLE FOR CRASH TEST DUMMY CERTIFICATION AND TEST BENCH
TABLE D'ESSAI POUR LA CERTIFICATION DE MANNEQUINS D'ESSAI DE CHOC ET BANC D'ESSAI

(30) Priorität: 04.04.2015 DE 102015004536
(43) Veröffentlichungstag der Anmeldung: 14.02.2018
(73) Patentinhaber: Pfeifer, Gerhard, 63867 Johannesberg (DE)
(72) Erfinder: Pfeifer, Gerhard, 63867 Johannesberg (DE)
(74) Vertreter: Rösler, Frank
(86) Internationale Anmeldenummer: PCT/DE2016/000138
(87) Internationale Veröffentlichungsnummer: WO 2016/162001

(56) Entgegenhaltungen:
- DE-A1-102013 009 705
- US-A- 1 717 693
- US-A1- 2004 074 283
- US-A1- 2008 016 970
- US-A1- 2014 357 430

## Beschreibung

Nachfolgend wird ein Prüftisch zur Zertifizierung von Crashtest-Dummys beschrieben. Desweiteren wird ein Prüfstand beschrieben.

Crashtest-Dummys werden von der Kraftfahrzeugindustrie verwendet, um die Sicherheit von Kraftfahrzeugen hinsichtlich des Insassenschutzes bei Unfällen zu prüfen. Hierzu werden verschiedene normierte Crashtests durchgeführt, z.B. Frontalcrashs, Seitencrashs, Heckcrashs und Überschlagstests. Die Crashtest-Dummys werden in zu testende Kraftfahrzeuge gesetzt oder anderweitig positioniert und die entsprechenden Crashtests durchgeführt.

Die verwendeten Crashtest-Dummys weisen eine Vielzahl von Sensoren auf, um die Einwirkung des Crashs auf den Crashtest-Dummy messen zu können. Die verwendeten Sensoren sind in vielen Fällen Kraftsensoren, Wegsensoren und Beschleunigungssensoren. Während der Durchführung des Crashtests werden durch diese Sensoren auftretende Beschleunigungen, Eindringungen und Kräfte gemessen und aufgezeichnet. Die Messdaten werden anschließend ausgewertet und die Belastung überprüft.

Die Crashtest-Dummys sollen in ihren Eigenschaften Menschen simulieren. Dies bezieht sich auf Maße, Beweglichkeit, Gewicht und dergleichen. Crashtest-Dummys sind aufgrund dessen schwer zu handhaben.

Ein Crashtest-Dummy regelmäßig zertifiziert werden, um sicherzustellen, dass dieser verlässliche Werte zurückgibt. Die Messkette aus Mechanik Sensorik der Crashtest-Dummys muss zur Zertifizierung überprüft werden. Hierzu sind eine Vielzahl unterschiedlicher Tests vonnöten.

Einige der Tests sehen vor, dass ein Prüfpendel, das eine definierte Masse aufweist und das an einer Seilanordnung definierter Länge aufgehängt ist, aus einer definierten Höhe gegen vorbestimmte Punkte des Crashtest-Dummys geschwungen wird. Solche vorbestimmten Punkte sind beispielsweise an Hüfte, Schultern, Brustbein und Kopf angeordnet. Das Pendel hat beim Aufprall aufgrund der bekannten Masse und der genau definierten Pendelbewegung einen exakt bestimmten Impuls. Diese Präzision wird genutzt, um die Reaktion der Sensoren des Crashtest-Dummys auf den exakt bestimmten Impuls zu prüfen. Sollte ein Sensor einen Wert ausgeben, der nicht innerhalb eines engen Wertekorridors liegt, weist dies auf einen Defekt des Sensors oder der mechanischen Komponenten des Crashtest-Dummys hin und der betreffende Sensor oder die defekten mechanischen Komponenten werden ausgetauscht. Durch die Zertifizierung der Crashtest-Dummys wird sichergestellt, dass das Messystem Crashtest-Dummy korrekte Werte liefert, mit Hilfe derer die Fahrzeugzulassungsprüfungen durchführbar sind.

Übliche Zertifizierungseinrichtungen, die mit den vorbeschriebenen Prüfpendeln arbeiten, sind um das Prüfpendel herum konstruiert. Der Crashtest-Dummy muss, abhängig von dem jeweils durchzuführenden Test, exakt zu einem durch das Prüfpendel bestimmten Referenzpunkt positioniert werden. Aufgrund der Eigenschaften der Crashtest-Dummys, der Größe, der beweglichen Gliedmaßen und des hohen Gewichts der meisten Crashtest-Dummys, insbesondere der erwachsenen Crashtest-Dummys, ist diese Arbeit für das die Prüfungen durchführende Personal körperlich sehr anstrengend. Zudem müssen zur Zertifizierung eines einzelnen Crashtest-Dummys mehrere Versuche am Prüfpendel vorgenommen werden, sodass ein Crashtest-Dummy für eine Zertifizierung mehrfach neu positioniert werden muss. Die Positionierung muss sehr präzise zum Referenzpunkt erfolgen. Diese Aufgabe ist zeitaufwendig, sodass nur eine geringe Anzahl von Zertifizierungen pro Tag erledigt werden können. Zudem stehen die Crashtest-Dummys während der Zertifizierung nicht zur Durchführung von Crashtests zur Verfügung. Der Betrieb eines Zertifizierungslabors ist notwendig, aber unwirtschaftlich.

Die US 2004/0074283 A1 offenbart eine Vorrichtung zum Prüfen eines Sporthelms mit einem Pendelarm mit einem ersten und einem zweiten Ende, wobei das erste Ende drehbar gelagert ist, wobei am zweiten Ende ein Gewicht angeordnet ist, wobei eine Kopfform auf einer Basis angeordnet ist,, wobei die Kopfform eine Mehrzahl von Beschleunigungssensoren zur Messung linearer und rotatorischer Kräfte aufweist, wobei der Helm nach dem Aufsetzen auf die Kopfform geprüft wird.

Damit stellt sich die Aufgabe, Anordnungen anzugeben, die eine schnellere Zertifizierung von Crashtest-Dummys als herkömmliche Anordnungen ermöglicht und die zudem für das Zertifizierungspersonal einfacher handhabbar sind als herkömmliche Zertifizierungsein richtungen.

Die Aufgabe wird gelöst durch einen Prüftisch gemäß Anspruch 1 sowie mit einem Prüfstand gemäß dem nebengeordneten Anspruch 10. Weiterführende Ausgestaltungen sind Gegenstand der abhängigen Ansprüche.

Ein nachfolgend beschriebener Prüftisch ist zur Zertifizierung von Crashtest-Dummys geeignet. Der Prüftisch weist einen Hubtisch mit einer höhenverstellbaren Tischplatte auf. Auf der Tischplatte kann ein Crashtest-Dummy zur Durchführung von Zertifizierungsprüfungen positioniert werden. Die Tischplatte ist am Hubtisch horizontal verstellbar, um den Crashtest-Dummy relativ zu einem raumfesten Referenzpunkt zu positionieren. Ein solcher Referenzpunkt kann ein definierter Kontaktpunkt eines Prüfpendels sein.

Die Verwendung eines entsprechenden höhenverstellbaren Hubtischs mit horizontal verstellbarer Tischplatte erleichtert die Handhabung und Positionierung eines entsprechenden Crashtest-Dummys. Der Crashtest-Dummy kann in einer für das Bedienpersonal günstigen, insbesondere ergonomisch günstigen Position auf der Tischplatte positioniert werden. Anschließend kann der Crashtest-Dummy durch die Höhenverstellung der Tischplatte sowie die horizontale Verstellbarkeit exakt zum Referenzpunkt ausgerichtet und positioniert werden. Durch die mehrachsige Verstellbarkeit des Hubtisches wird ein schnelleres Zertifizieren des Crashtest-Dummys als bislang ermöglicht.

Dabei ist ein Hebezeug vorgesehen, mit dessen Hilfe Gegenstände auf die Tischplatte hebbar sind. Mit Hilfe des Hebezeugs kann somit ein Crashtest-Dummy auf die Tischplatte gehoben werden, was die Ergonomie und die Bedienerfreundlichkeit für das Prüfpersonal weiter verbessert. Crashtest-Dummys werden üblicherweise an rollbaren Gestellen hängend aufbewahrt. Mit Hilfe des Hebezeugs kann ein Crashtest-Dummy somit einfach aus seinem Gestell gehoben und auf dem Hubtisch positioniert werden.

Des Weiteren ist vorgesehen, dass der Hubtisch ein Gegengewicht für das Hebezeug darstellt. Auf diese Weise kann der Hubtisch die beim Heben entstehenden Dreh- bzw. Kippmomente kompensieren. Ein entsprechend ausgerüsteter Tisch erlaubt somit, Crashtest-Dummys zügig und ergonomisch zu zertifizieren. Die Zertifizierungskosten einschließlich der durch den Nutzungsausfall entstehenden Kosten sinken und die Wirtschaftlichkeit steigt. Ein entsprechender Prüftisch ist zudem recht kompakt und erleichtert damit die Planung und den Aufbau eines entsprechenden Zertifizierungslabors. Dadurch, dass Hubtisch und Hebezeug eine statische Einheit bilden, sind die notwendigen baulichen Maßnahmen und Anforderungen an das Gebäude des Prüflabors zur Aufstellung eines entsprechenden Prüftisches gering.

Desweiteren ist eine Tragestruktur vorgesehen, auf der Hubtisch und Hebezeug befestigt sind. Mit Hilfe der Tragestruktur lässt sich das Trägheitsmoment des Prüftisches vergrößern. Somit können größere Kippmomente, die über das Hebezeug beim Heben von Gegenständen entstehen, mit Hilfe des Hubtischs als Gegengewicht kompensiert werden. Eine entsprechende Tragestruktur verbindet Hubtisch und Hebezeug statisch. Zudem erlaubt eine entsprechende Tragestruktur die einfache Positionierung und Festlegung des Prüftischs in einem Prüflabor.

Darüber hinaus ist vorgesehen, dass die Tragestruktur an oder auf einer ortsfest anordenbaren Basis linear verstellbar gelagert ist. Auf diese Weise kann eine einfachere Positionierung des Crashtest-Dummys relativ zum Referenzpunkt unabhängig von der aktuellen Ausrichtung der Tischplatte erreicht werden. Diese Ausgestaltung erweitert den Prüfstand zu einem Vierachsenhubtisch mit drei linearen Achsen und einer Drehachse.

Eine erste weiterführende mögliche Ausgestaltung des Prüftischs sieht vor, dass der Hubtisch ein Drehwerk aufweist, dessen Rotationsachse vertikal ausgerichtet ist, wobei an dem Drehwerk eine horizontal ausgerichtete Linearführung angeordnet ist, wobei die Tischplatte an der Linearführung festgelegt ist. Mit Hilfe des Drehwerk ist es möglich, die Tischplatte nebst darauf sitzendem Crashtest-Dummy zu drehen und diesen in verschiedenen relativen Ausrichtungen zur Prüfsonde zu positionieren. So können beispielsweise Tests, die von links und rechts durchgeführt werden, beispielsweise Schulterstoßtest oder Hüftstoßtests, durchgeführt werden, ohne dass der Crashtest-Dummy grundlegend neu positioniert werden muss. Stattdessen reicht es aus, die Tischplatte entsprechend zu drehen. Durch die an dem Drehwerk angeordnete Linearführung ist es des Weiteren möglich, den Tisch relativ zum Referenzpunkt, der raumfest ist, durch Verschieben anzuordnen. Dies ermöglicht es, den Crashtest-Dummy präzise zu positionieren. Der Aufwand zur Positionierung des Crashtest-Dummys auf der Tischplatte kann gegenüber Anordnungen mit weniger Freiheitsgraden somit erheblich reduziert werden.

Gemäß einem anderen weiterführenden Aspekt kann vorgesehen sein, dass die Tischplatte arretierbar ist. Auf diese Weise kann ein versehentliches Verdrehen der Tischplatte vermieden werden. Die Arretierung kann an verschiedenen Stellen stattfinden. Eine Möglichkeit der Umsetzung ist, die Tischplatte an ihren Führungen, also je nach Ausgestaltung an der Höhenverstellung, an den Linearführungen und am Drehwerk festzulegen. Statt einer Arretierung können mehrere Arretierungen vorgesehen werden.

Ein anderer möglicher Aspekt des hier beschriebenen Prüftischs sieht vor, dass Hubtisch, Linearführung und/oder Drehwerk Antriebsmotoren zum Verfahren und/oder Verschwenken der Tischplatte aufweisen. Durch entsprechende Antriebsmotoren kann einerseits die notwendige Bedienkraft minimiert werden, andererseits ist es möglich, auf einfache Weise vordefinierte Positionen anzufahren. Somit kann eine rasche Positionierung oder zumindest Vorpositionierung des zu zertifizierenden Crashtest-Dummys vorgenommen werden, was den Zeitaufwand reduziert.

In einer weiterführenden Ausgestaltung des hier beschriebenen Prüftischs kann der Hubtisch als Scherenhubtisch ausgebildet sein, der mindestens zwei beiderseits drehbare und je einerseits axial beweglich gelagerte Schenkelpaare aufweist. Die Schenkelpaare können durch ein Lager, insbesondere in der Schenkelmitte, miteinander verbunden sein. Durch Verfahren der axial beweglich gelagerten Schenkelpaare kann die Höhe des Hubtischs verändert werden. Die Ausgestaltung des Hubtischs als Scherenhubtisch lässt sich einerseits ein großer Hubbereich mit einem sehr niedrigen unteren Limit des Hubbereichs erreichen, andererseits sind Scherenhubtische sehr stabil. Zudem lassen sich Scherenhubtische sehr genau in der Höhe einstellen.

In einer weiterführenden Ausgestaltung des Prüftischs kann das Hebezeug als Zughebezeug ausgestaltet sein. Das Zughebezeug kann beispielsweise ein Kettenzug oder ein Seilzug sein. Eine solche Kette oder Seil ist einfach bedienbar. Zudem kann die Kette oder das Seil während der Zertifizierungstests unter Umständen lose an dem Crashtest-Dummy als Sicherung befestigt bleiben, z.B. an seinem Kopf, sodass der Crashtest-Dummy nicht von der Tischplatte fallen kann. Eine Beeinträchtigung des Zertifizierungstests ist bei leichten Ketten oder Seilen mit leichten Verbindern, z.B. Haken oder Karabinerhaken, die an dem Crashtest-Dummy verbleiben, nicht zu erwarten.

Das Zughebezeug weist in einer weiterführenden Ausgestaltung einen Manipulator auf, der verschwenkbar und/oder knickbar ist. Ein entsprechender schwenk- und/oder knickbarer Manipulator erlaubt einerseits das Heben eines Crashtest-Dummys auf die Tischplatte und andererseits, den Manipulator anschließend so einzustellen und zu positionieren, dass er für die durchzuführenden Tests nicht im Weg steht. Eine Kollision einer schwingenden, an einem Seil befestigten Prüfsonde mit dem Manipulator kann somit vermieden werden.

Ein anderer Aspekt des hier beschriebenen Prüftischs sieht vor, dass das Hebezeug an einem Rahmen angeordnet ist, der an der Tragestruktur festgelegt ist, wobei der Rahmen den Hubtisch zumindest teilweise einrahmt. Auf diese Weise ist es möglich, das Hebezeug derart am Prüftisch anzuordnen, dass der Platzbedarf hierfür reduziert ist. Dadurch, dass der Rahmen derart gestaltet ist, dass der Hubtisch teilweise zwischen dem Rahmen positioniert sein kann, kann der Hubtisch dicht an dem Hebezeug und das Hebezeug dicht an dem Referenzpunkt angeordnet werden. Somit werden darüber hinaus die beim Heben eines Crashtest-Dummys entstehenden Kippmomente reduziert, da ein entsprechender Prüftisch kompakter ist und das Hebezeug mit seinem Auflager sehr dicht an der Tischplatte oder sogar über der Tischplatte positionierbar ist und dadurch die Länge des Manipulators kürzer ausfallen kann.

In einer weiteren möglichen Ausgestaltung des hier beschriebenen Prüftischs kann ein Antrieb für den Hubtisch vorgesehen sein, der einerseits an dem Rahmen und andererseits an einem höhenverstellbaren Teil des Hubtischs festgelegt ist. Insbesondere kann der Antrieb oberhalb des Hubtischs angeordnet sein und diesen somit über den Rahmen abgestützt nach oben ziehen. Dies erlaubt einerseits, den Hubtisch sehr weit nach unten abzusenken, da unter dem Hubtisch kein Platz für einen Antrieb vorgesehen werden muss. Andererseits kann durch eine derartige Anordnung des Antriebs erreicht werden, dass die Antriebskraft parallel zur Schwerkraft eingeleitet wird, was ermöglicht, einen sehr hohen Wirkungsgrad des Antriebs zu erreichen. Die Dimensionierung des Antriebs kann entsprechend kleiner ausfallen als bei Hubtischantrieben, die nicht parallel zur Schwerkraftrichtung arbeiten. Insbesondere bei Antrieben, die bei Scherenhubtischen mitschwenken, kann bei bestimmten Positionen nur ein sehr geringer Anteil der Antriebskraft in Hubarbeit umgesetzt werden, weswegen die Antriebe sehr stark sein müssen. Kniehebelpositionen müssen bei solchen Hubtischen vollständig vermieden werden.

Ein anderer weiterführender Aspekt des hier beschriebenen Prüftischs sieht vor, dass an der Basis eine Vermessungseinrichtung zur Vermessung der Position des Hubtischs angeordnet ist. Eine solche Vermessungseinrichtung kann beispielsweise optische Verfahren, beispielsweise Laser verwenden. Mit Hilfe einer solchen Vermessungseinrichtung kann eine genaue Ausrichtung der Tischplatte zum Referenzpunkt erreicht werden.

Ein anderer weiterführender Aspekt sieht eine Steuerungseinrichtung vor, mit Hilfe derer der Prüftisch betreibbar ist. Die Steuerungseinrichtung kann dazu eingerichtet sein, bestimmte Positionen anzufahren, die programmierbar bzw. vorprogrammiert sind. Auf diese Weise lässt sich der Einstellungsaufwand des Prüftischs für einen Zertifizierungstest reduzieren. Des Weiteren können verschiedene Programme gespeichert sein, die mehrere aufeinanderfolgende Tests umfassen und die nacheinander entsprechende Positionen anfahren. Auf diese Weise kann eine Zertifizierungsdokumentation leichter erstellt werden.

Ein erster unabhängiger Gegenstand betrifft einen Prüfstand zur Zertifizierung von Crashtest-Dummys, der einen Prüftisch nach einer der zuvor beschriebenen Ausgestaltungen aufweist und zusätzlich ein Pendel zur Durchführung von Pendeltests an auf der Tischplatte angeordneten Crashtest-Dummys. Der Referenzpunkt wird angegeben durch den vorgesehenen Auftreffpunkt des Pendels auf den Crashtest-Dummy.

Ein weiterer unabhängiger Gegenstand betrifft einen Hubtisch gemäß den folgenden Aspekten:
a) Hubtisch, der eine höhenverstellbare Tischplatte aufweist, wobei die Tischplatte am Hubtisch horizontal verstellbar ist, wobei der Hubtisch ein Drehwerk aufweist, dessen Rotationsachse vertikal ausgerichtet ist, wobei an dem Drehwerk eine horizontal ausgerichtete Linearführung angeordnet ist, wobei die Tischplatte an der Linearführung festgelegt ist.
b) Hubtisch nach Aspekt a), wobei eine Arretierung für die Tischplatte vorgesehen ist.
c) Hubtisch nach einem der Aspekte a) oder b), wobei Linearführung und/oder Drehwerk Antriebsmotoren zum Verfahren und/oder Verschwenken der Tischplatte aufweist.
d) Hubtisch nach einem der vorangegangenen Aspekte, wobei der Hubtisch als Scherenhubtisch mit wenigstens zwei beiderseits drehbar gelagerten und je einerseits axial beweglich gelagerten Schenkelpaaren ausgebildet ist, wobei die Schenkelpaare) mittels wenigstens eines Lagers miteinander verbunden sind.
e) Hubtisch nach einem der vorangegangenen Aspekte, wobei eine Tragestruktur vorgesehen ist, auf der Hubtisch und Hebezeug befestigt sind.
f) Hubtisch nach Aspekt e), wobei die Tragestruktur auf einer ortsfest anordenbaren Basis linear verstellbar gelagert ist.
g) Hubtisch nach einem der vorangegangenen Aspekte, wobei das Hebezeug ein Zughebezeug ist, das einen Manipulator aufweist, der knick- und/oder schwenkbar ist.
h) Hubtisch nach einem der Aspekte e) bis g), wobei das Hebezeug an einem Rahmen angeordnet ist, der an der Tragestruktur festgelegt ist, wobei der Rahmen den Hubtisch zumindest teilweise einrahmt.
i) Hubtisch nach Aspekt h), wobei ein Antrieb für den Hubtisch vorgesehen ist, der einerseits an dem Rahmen festgelegt ist und andererseits an einem höhenverstellbaren Teil des Hubtisches.
j) Hubtisch nach einem der vorangegangenen Aspekte, wobei an der Basis eine Vermessungseinrichtung zur Vermessung der Position des Hubtisches angeordnet ist.

Weitere Ziele, Merkmale sowie vorteilhafte Anwendungsmöglichkeiten der Erfindung ergeben sich aus der nachfolgenden Beschreibung eines Ausführungsbeispiels anhand der Zeichnungen. Dabei bilden sämtliche beschriebenen und/oder bildlich dargestellten Merkmale in ihrer sinnvollen Kombination den Gegenstand der vorliegenden Erfindung, auch unabhängig von den Patentansprüchen und deren Rückbezügen. Es zeigen schematisch:
- Fig. 1: eine perspektivische Ansicht eines Prüftischs;
- Fig. 2: eine Schnittansicht des Prüftischs entlang der Schnittlinie A-A aus Fig. 1;
- Fig. 3: eine perspektivische Ansicht des Prüftischs mit abgenommenem Verkleidungsteil;
- Fig. 4: eine Seitenansicht des Prüftischs mit abgenommenem Seitenteil und abgenommener Fußleiste;
- Fig. 5: eine perspektivische Ansicht des Prüftischs von schräg unten;
- Fig. 6: eine perspektivische Ansicht auf den Prüftisch mit abgenommener Tischplatte;
- Fig. 7: eine Draufsicht auf den Prüftisch mit abgenommener Tischplatte;
- Fig. 8: ein Prüfstand mit einem auf dem Prüftisch positionierten Crashtest-Dummy in perspektivischer Ansicht;
- Fig. 9: eine Draufsicht auf den Prüfstand;
- Fig. 10a: eine Frontalansicht auf einen Prüfstand mit einem Crashtest-Dummy in einer Position zur Zertifizierung der rechten Schulter;
- Fig. 10b: eine Frontalansicht auf einen Prüfstand mit einem Crashtest-Dummy in einer Position zur Zertifizierung der linken Schulter;
- Fig. 11: eine Seitenansicht auf den Prüfstand mit einem Crashtest-Dummy in einer Position zur Thoraxzertifizierung;
- Fig. 12: eine Seitenansicht auf den Prüfstand mit einem Crashtest-Dummy in einer Position zur Kniezertifizierung, sowie
- Fig. 13: eine Seitenansicht auf den Prüfstand mit einem Crashtest-Dummy in einer Position zur Kopfzertifizierung.

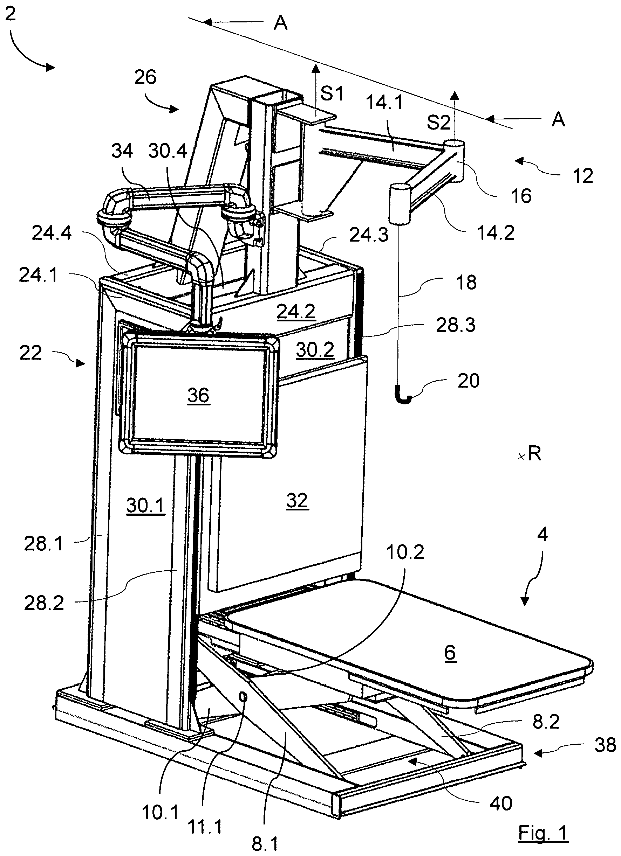

Fig. 1 zeigt eine schematische perspektivische Darstellung eines Prüftischs 2.

Der Prüftisch 2 weist einen Hubtisch 4 auf. Der Hubtisch 4 ist als Scherenhubtisch ausgestaltet. Der Scherenhubtisch 4 weist eine Tischplatte 6 auf. Die Tischplatte 6 ist horizontal ausgerichtet. Der Scherenhubtisch 4 weist zwei Scherenarmpaare 8.1, 8.2 sowie 10.1, 10.2 auf. Das Scherenarmpaar 8.1, 8.2 und das Scherenarmpaar 10.1, 10.2 sind über Lager 11.1, 11.2 (nicht sichtbar) miteinander drehbar verbunden. Durch Verstellen der Scherenarmpaare 8.1, 8.2 sowie 10.1, 10.2 relativ zueinander ist durch die Verbindung der Scherenarmpaare 8.1 und 10.1 sowie 8.2 und 10.1 mittels der Lager 11.1, 11.2 eine Höhenverstellung der Tischplatte 6 möglich.

Des Weiteren ist ein Hebezeug 12 vorgesehen. Das Hebezeug 12 ist als Zughebezeug ausgestaltet. Das Zughebezeug 12 weist einen um eine Schwenkachse S1 verschwenkbaren Manipulator 14 auf. Der Manipulator 14 ist knickbar und weist einen ersten Arm 14.1 und einen zweiten Arm 14.2 auf, die über ein Gelenk 16 miteinander verbunden sind. Der Arm 14.2 ist durch das Gelenk 16 entlang der Schwenkachse S2 relativ zum Arm 14.1 schwenkbar. Die Schwenkachsen S1 und S2 sind jeweils vertikal ausgerichtet.

Am Manipulator 14 ist ein Seil 18 oder eine Kette mit einem Haken 20 angeordnet. Das Seil 18 kann aus- und eingefahren werden, um an dem Haken 20 Lasten zu befestigen und diese hochzuheben. Durch Verschwenken des Manipulators 14 und Strecken der Arme 14.1, 14.2 kann somit ein außerhalb des Prüftischs 2 angeordnetes Prüfstück, z.B. ein Crashtest-Dummy, hochgehoben werden. Durch Verschwenken des Manipulators 14 kann das Prüfstück über die Tischplatte 6 gebracht werden und durch Ablassen des Hakens 20 auf der Tischplatte 6 positioniert werden.

Das Hebezeug 12 ist an einem Rahmen 22 angeordnet. Der Rahmen 22 bildet im Wesentlichen ein Quaderprofil. Dazu sind einerseits horizontale Stützen 24.1, 24.2, 24.3, 24.4 vorgesehen, an denen ein weiterer Rahmen 26 angeordnet ist. An dem Rahmen 26 ist das Hebezeug 12 festgelegt. Der Rahmen 22 weist andererseits vertikale Stützen 28.1 bis 28.4 (nicht sichtbar) auf. Der Rahmen 22 bildet eine Tragestruktur für das Hebezeug 12.

Die vertikalen Stützen 28.1 bis 28.4 sind derart angeordnet, dass der Scherenhubtisch 4 schmaler baut als eine lichte Weite, die durch die Stützen 28.2, 28.3 gebildet ist. Der Scherenhubtisch 4 kann somit teilweise in den Rahmen 22 eintauchen, was den Platzbedarf reduziert und es erlaubt, den Manipulator 14 kurz zu bauen. Ein kurzer Manipulator 14 kann aufgrund des beim Heben von Lasten enstehenden geringeren Drehmoments bei gleicher Auslegung höhere Lasten tragen als längere Manipulatoren.

Die vertikalen Stützen 28.1 bis 28.4 sind mit Verkleidungsteilen 30.1 bis 30.4 (teilweise nicht sichtbar) verkleidet. Die Verkleidungsteile 30.1 bis 30.4 können teilweise als Türen ausgebildet sein.

Zwischen den vertikalen Stützen 28.2, 28.3 ist des Weiteren eine Prallmatte 32 angeordnet. Die Prallmatte 32 dient zur Aufnahme von Energie von Prüfstücken, die auf dem Prüftisch 2 geprüft werden und die bei der Prüfung einen Impuls abbekommen in Richtung des Rahmens 22.

An dem Rahmen 26 ist des Weiteren ein Ausleger 34 angeordnet, an dem ein Bildschirm 36 positionsveränderlich befestigt ist. Der Bildschirm 36 kann zur Anzeige von relevanten Informationen am Prüftisch 2 dienen, kann aber auch berührungsempfindlich ausgebildet sein, um den Prüftisch 2 bedienen zu können. Mit Hilfe des berührungsempfindlichen Bildschirms 36 können somit unterschiedliche Funktionen und Programme des Prüftischs 2 angesteuert werden, wie etwa eine Einstellung der Position der Tischplatte 6 oder eine Betätigung des Hebezeugs 12.

Scherenhubtisch 4 sowie Hebezeug 12 sind gemeinsam an einer Tragestruktur 38 festgelegt. Die Tragestruktur 38 ist vorliegend als Rahmen ausgebildet. Drehmomente, die über das Hebezeug 12 induziert werden, können durch die Tragestruktur 38 mit Hilfe des Scherenhubtischs 4 als Gegengewicht kompensiert werden, sodass der Prüftisch 2 stabil steht.

Die Tischplatte 6 des Scherenhubtischs 4 ist vielfach verstellbar. Einerseits kann die Höhe der Tischplatte 6 durch Verstellen der Scherenarmpaare 8.1, 8.2, 10.1, 10.2 verändert werden.

Darüber hinaus ist die Tischplatte 2 entlang einer vertikalen Achse drehbar und zudem horizontal verstellbar, wie nachfolgend genauer erläutert werden wird. Somit kann ein Prüfstück, das auf der Tischplatte 6 ist, durch Verstellen der Tischplatte 6 relativ zu einem Referenzpunkt R genau positioniert werden.

Die Tragestruktur 38 ist auf einer Basis 40 angeordnet. Die Basis 40 kann im Prüflabor fest verankert sein.

Die Tragestruktur 38 ist in manchen Ausgestaltungen relativ zur Basis 40 entlang einer Achse verstellbar. Diese Verstellung erlaubt eine Kompensation der relativen Position der Tischplatte 6 zum Referenzpunkt R beim Hoch- und Herunterfahren der Tischplatte 6 durch Verstellung der Scherenarmpaare 8.1, 8.2, 10.1, 10.2.

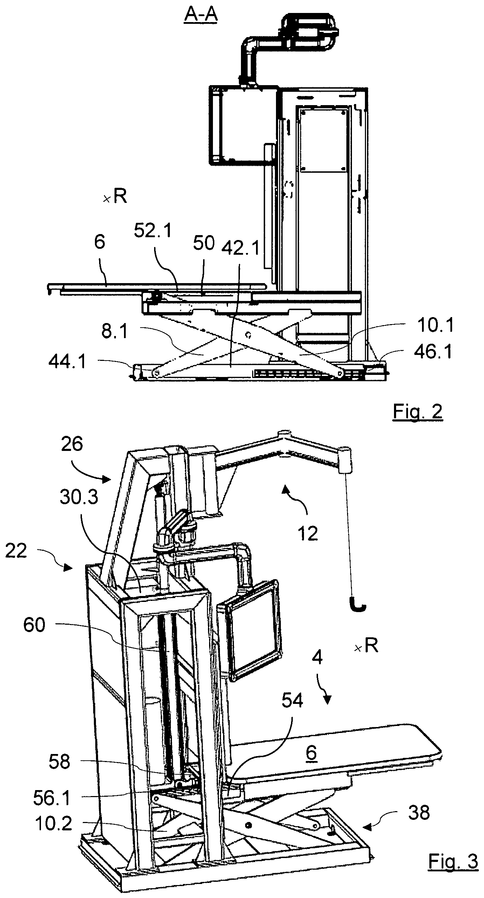

Fig. 2 zeigt eine Schnittdarstellung entlang der Schnittlinie A-A aus Fig. 1.

Der Scherenarm 8.1 ist drehbar, aber ortsfest relativ zu einem Träger 42.1 der Tragestruktur 38 angeordnet. Hierzu ist der Scherenarm 8.1 über ein Lager 44.1 mit dem Träger 42.1 verbunden. An dem Träger 42.1 ist des Weiteren eine Kugelumlaufspindelführung 46.1 für den Scherenarm 10.1 vorgesehen. Die Kugelumlaufspindelführung 46.1 kann gleichzeitig eine Wegmessvorrichtung darstellen bzw. aufweisen, mit der die vertikale Position der Tischplatte 6 bestimmbar ist.

Die Tischplatte 6 ist mittels eines Drehwerks 50 horizontal drehbar. Auf dem Drehwerk 50 ist ein Linearantrieb 52.1 angeordnet, auf dem die Tischplatte 6 befestigt ist. Der Linearantrieb 52.1 erlaubt die Verstellung der Tischplatte 6 ebenfalls horizontal. Hierdurch kann die Tischplatte 6 relativ zum Referenzpunkt R genau positioniert werden.

Fig. 3 zeigt eine perspektivische Ansicht auf den Prüftisch 2 mit abgenommenen Verkleidungsteil 30.1.

Der Scherenhubtisch 4 weist an seinem höhenverstellbaren Teil einen Rahmen 54 auf, an dem das in Fig. 3 nicht sichtbare Drehwerk 50 festgelegt ist. Am Rahmen 54 ist die Linearführung 56.1 angeordnet, die ebenfalls als Kugelumlaufspindelführung ausgebildet ist. Beim Höhenverstellen wird somit das Scherenarmpaar 8.1, 8.2 relativ zum Rahmen 54 geführt.

Der Rahmen 54 weist einen Querträger 58 auf, an dem ein Linearantrieb 60 angreift. Der Linearantrieb 60 kann beispielsweise als Spindeltrieb oder Teleskoptrieb ausgebildet sein. Der Linearantrieb 60 ist anderen Ends am Rahmen 26 festgelegt. Der Linearantrieb 60 greift somit von oben an dem Rahmen 54 des Hubtisches 4 an und zieht diesen beim Hochstellen der Tischplatte 6 nach oben. Kräfte werden über den Rahmen 22 in die Tragestruktur 38 geleitet.

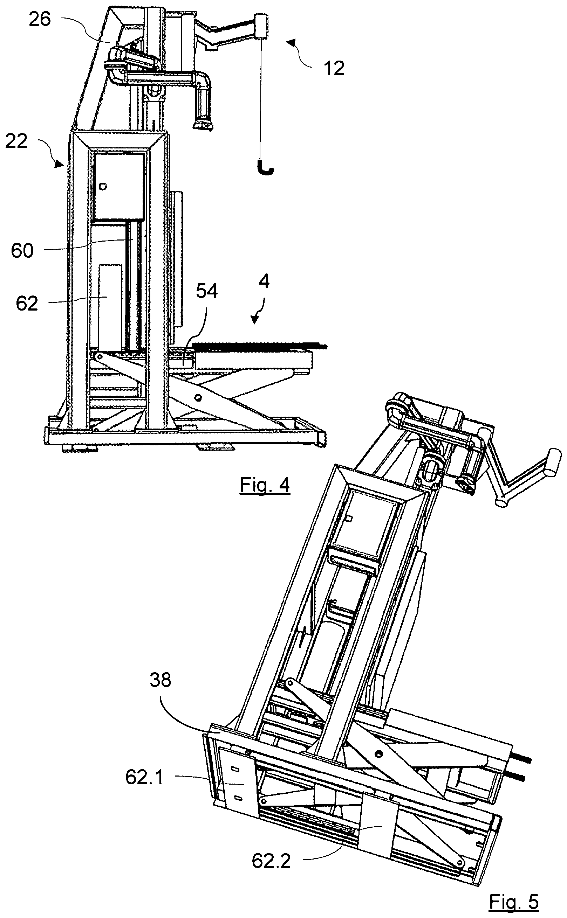

Fig. 4 zeigt eine Seitenansicht des Prüftischs 2.

Ein Antriebsmotor 62 des Linearantriebs 60 ist auf dem Rahmen 54 angeordnet. Dies erhöht einerseits das Gewicht im hinteren Bereich des Prüftischs 2, was die statische Stabilität für das Hebezeug 12 erhöht und was gleichzeitig die statische Stabilität des Scherenhubtischs 4 bei aufliegendem Prüfstück erhöht.

Fig. 5 zeigt den Prüftisch 2 von schräg unten.

Die Basis 40 weist zwei am Grund befestigbare Platten 62.1, 62.2 auf. Die Tragestruktur 38 ist relativ zu den Platten 62.1, 62.2 axial verstellbar. Hierzu ist ein möglichst spielfreier Linearantrieb, z.B. mit Kugelumlaufspindelführungen, vorgesehen.

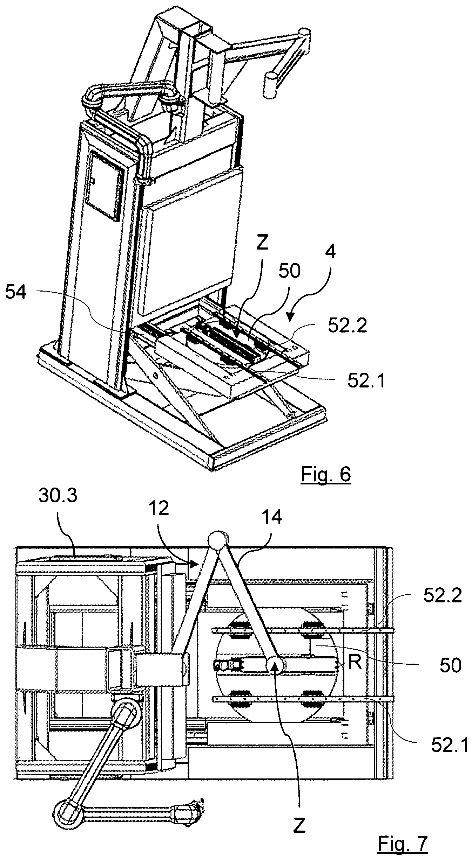

Fig. 6 zeigt eine schematische perspektivische Ansicht auf dem Prüftisch 2 mit abgenommener Tischplatte 6.

In Fig. 6 sind das Drehwerk 50 und die darauf festgelegten Lineartriebe 52.1, 52.2 sichtbar. Das Drehwerk 50 ist dem Rahmen 54 angeordnet. Die Linearantriebe 52.1, 52.2 sind auf dem Drehwerk 50 positioniert, sodass deren Achse mit einer Verstellung des Drehwerks mitdrehen. Drehwerk 50 sowie Linearantriebe 52.1, 2 sind arretierbar bzw. weisen keinen Freilauf oder nur einen sperrbaren Freilauf auf.

Durch die relative Verstellbarkeit der Tragestruktur 38 zusammen mit dem Scherenhubtisch 4, der Verdrehbarkeit des Drehwerks 50, der Verstellbarkeit der (hier ausgeblendeten) Tischplatte 6 relativ zum Drehzentrum Z des Drehwerks 50 sowie der Höhenverstellbarkeit des Scherenhubtischs 4 kann die Tischplatte 6 präzise zum Referenzpunkt R ausgerichtet werden. Der Prüftisch 2 bietet somit vier Freiheitsgrade zur Positionierung des entsprechenden Prüfstücks.

Fig. 7 zeigt eine Draufsicht auf den Prüftisch 2 mit abgenommener Tischplatte.

Der Manipulator 14 kann genau über dem Drehzentrum Z der Tischplatte positioniert werden. Der Manipulator 14 ragt in dieser Position nicht bis zum Referenzpunkt R, was eine Kollision mit einem Prüfkörper vermeidet.

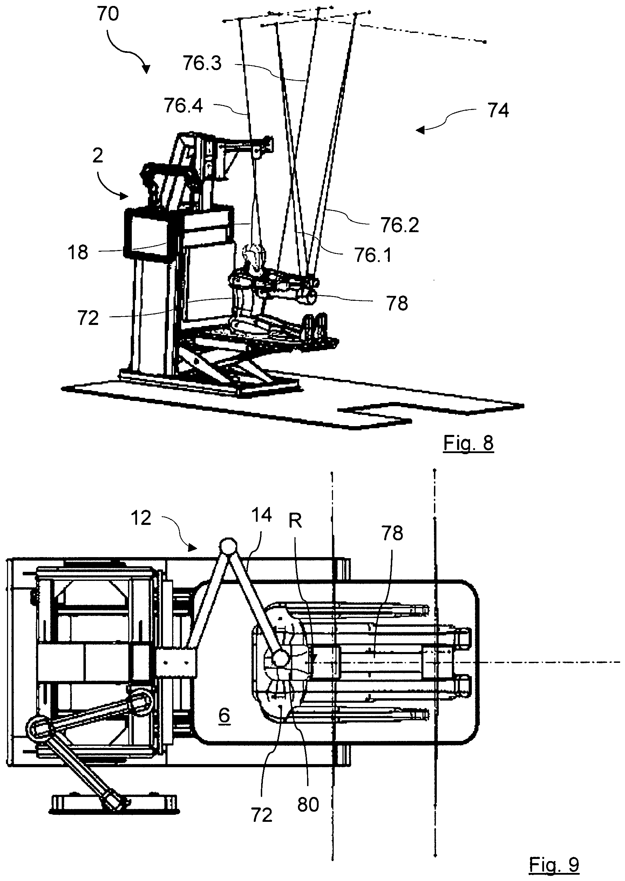

Fig. 8 zeigt einen Prüfstand 70 mit einem Prüftisch 2, einem Crashtest-Dummy 72 sowie ein Prüfpendel 74.

Das Prüfpendel 74 ist an Seilen 76.1 bis 76.4, die teilweise als Doppelseile ausgebildet sind, festgelegt. Die Seile 76.1 bis 76.4 weisen eine definierte Länge auf. Die Seile 76.1 bis 76.4 halten einen Prüfkörper 78 mit einer definierten Masse. Durch Auslenken des Prüfkörpers 78 auf eine bestimmte Höhe und durch Freigeben des Prüfkörpers 78 wird durch die Schwerkraft der Prüfkörper 78 beschleunigt und auf einer durch die Seile 76.1 bis 76.4 bestimmten Bahn geführt.

Der auf der Tischplatte 6 angeordnete Crashtest-Dummy 72 wird vorliegend an einem Thorax 86 getroffen, wobei der Treffpunkt genau mit dem Referenzpunkt R zusammenfällt.

Fig. 9 zeigt eine Draufsicht auf den Prüfstand 70.

Der Manipulator 14 ist genau über einem Kopf 80 des Crashtest-Dummys 72 positioniert und kann diesen mit einem losen Seil halten, sodass der Crashtest-Dummy 72 nach Auftreffen des Prüfkörpers 78 gehalten werden kann.

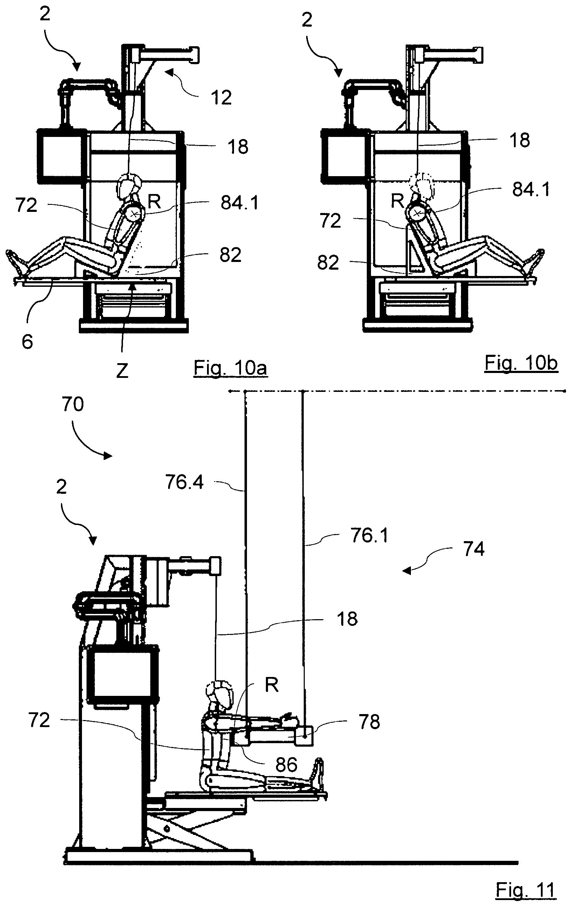

Die Fig. 10a, 10b zeigen zwei unterschiedliche Positionierungen des Crashtest-Dummys 72 relativ zum Referenzpunkt R.

Der Crashtest-Dummy 72 sitzt auf einem Sitzgestell 82. In Fig. 10a ist eine linke Schulter 84.1 relativ zum Referenzpunkt positioniert, in Fig. 10b eine rechte Schulter 84.2. Sollen beide Tests am gleichen Crashtest-Dummy 72 nacheinander durchgeführt werden, kann dies mit Hilfe des Prüftischs 2 einfach erreicht werden. So kann der Crashtest-Dummy 72 zunächst in der Position nach Fig. 10a positioniert werden, was durch Verdrehen der Tischplatte 6, von oben betrachtet im Uhrzeigersinn um 90° erfolgen kann. Danach wird die Schulter 84.1 relativ zum Referenzpunkt durch Höheneinstellung und durch Anpassung der Position der Tischplatte 6 relativ zum Drehzentrum Z ermöglicht. Dann wird der Test durchgeführt.

Der Crashtest-Dummy wird ggf. bei Verrutschen neu auf dem Sitzgestell 82 positioniert und anschließend wird die Tischplatte 6 durch Betätigen des Drehwerks 50 um 180° entgegen dem Uhrzeigersinn gedreht, wodurch die rechte Schulter 84.2 zum Referenzpunkt ausgerichtet werden kann. Gegebenenfalls werden die Linearantriebe 52.1, 52.2 betätigt, um möglicherweise einen Versatz der Schulter 84.2 zum Referenzpunkt R auszugleichen.

Die Fig. 11 bis 13 zeigen unterschiedliche Positionierungen des Crashtest-Dummys 72 zum Prüfpendel 74.

In Fig. 11 ist eine Positionierung für einen Test eines Thorax 86 des Crashtest-Dummys 72 dargestellt.

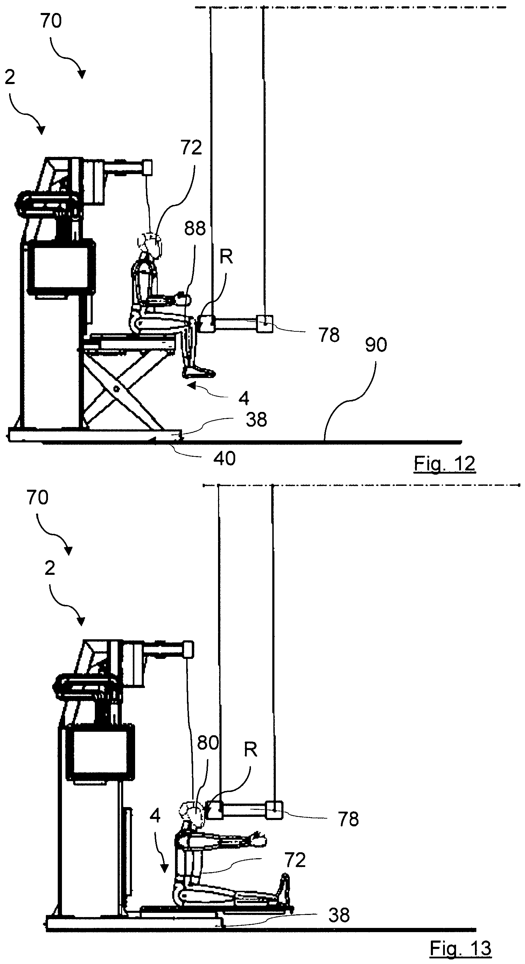

In Fig. 12 ist eine Positionierung zum Knietest dargestellt. Hierzu muss der Scherenhubtisch 4 angehoben werden, damit ein Knie 88 zum Referenzpunkt R bewegt wird. Gleichzeitig ist es erforderlich, die Tragestruktur 38 relativ zur Basis 40 nach hinten zu stellen, da das Knie weiter vorne ist als der Thorax 86 des Crashtest-Dummys 72.

Fig. 13 zeigt eine Einstellung zum Prüfen des Kopfs 80 des Crashtest-Dummys. Hierzu ist die Tischplatte 6 ganz heruntergefahren und gleichzeitig die Tragestruktur 38 wieder in einer vergleichbaren Position wie in Fig. 11, wobei die Position variieren kann, wenn der Kopf 80 des Crashtest-Dummys eine andere Position einnimmt als der Thorax 86.

Durch Verfahren der Tragestruktur 38 relativ zur an einem Boden 90 befestigten Basis 40 kann der Schwerpunkt des Crashtest-Dummys innerhalb der Abstützung der Tischplatte 6 durch die Scherenarmpaare 8.1, 8.2 sowie 10.1, 10.2 gehalten werden. Dies erhöht die Stabilität des Scherenhubtischs 4.

### Bezugszeichenliste

- 2: Prüftisch
- 4: Scherenhubtisch
- 6: Tischplatte
- 8.1, 8.2: Scherenarmpaar
- 10.1, 10.2: Scherenarmpaar
- 11.1, 11.2: Lager
- 12: Hebezeug
- 14: Manipulator
- 14.1, 14.2: Arm
- 16: Gelenk
- 18: Seil
- 20: Haken
- 22: Rahmen
- 24.1, 24.2, 24.3, 24.4: horizontale Stützen
- 26: Rahmen
- 28.1, 28.2, 28.3, 28.4: vertikale Stützen
- 30.1, 30.2, 30.3, 30.4: Verkleidungsteile
- 32: Prallmatte
- 34: Ausleger
- 36: Bildschirm
- 38: Tragestruktur
- 40: Basis
- 42.1, 42.2: Träger
- 44.1, 44.2: Lager
- 46.1, 46.2: Kugelumlaufführung
- 48.1, 48.2: Lager
- 50: Drehwerk
- 52.1, 52.2: Linearantrieb
- 54: Rahmen
- 56.1, 56.2: Kugelumlaufführung
- 58: Querträger
- 60: Linearantrieb
- 62.1, 62.2: Platten
- 70: Prüfstand
- 72: Crastest-Dummy
- 74: Prüfpendel
- 76.1, 76.2, 76.3, 76.4: Seil
- 78: Prüfkörper
- 80: Kopf
- 82: Sitzgestell
- 84.1: linke Schulter
- 84.2: rechte Schulter
- 86: Thorax (Brustkorb)
- 88: Knie
- 90: Boden

- R: Referenzpunkt
- S1: Schwenkachse
- S2: Schwenkachse
- Z: Drehzentrum

## Patentansprüche

1. Prüftisch zur Zertifizierung von Crashtest-Dummys, mit einem Hubtisch (4), der eine höhenverstellbare Tischplatte (6) aufweist, auf der ein Crashtest-Dummy (72) zur Durchführung von Zertifizierungsprüfungen positionierbar ist, wobei die Tischplatte (6) am Hubtisch (4) horizontal verstellbar ist, um den Crashtest-Dummy (72) relativ zu einem Referenzpunkt (R) zu positionieren, wobei der Prüftisch (2) ein Hebezeug (12) zum Heben von Gegenständen (72) auf die Tischplatte (6) aufweist, wobei der Hubtisch (4) ein Gegengewicht für das Hebezeug (12) darstellt, **dadurch gekennzeichnet, dass** eine Tragestruktur (38) vorgesehen ist, auf der Hubtisch (4) und Hebezeug (12) befestigt sind, wobei die Tragestruktur (38) auf einer ortsfest anordenbaren Basis (40) linear verstellbar gelagert ist.

2. Prüftisch nach Anspruch 1, wobei der Hubtisch (4) ein Drehwerk (50) aufweist, dessen Rotationsachse (Z) vertikal ausgerichtet ist, wobei an dem Drehwerk (50) eine horizontal ausgerichtete Linearführung (52.1, 52.2) angeordnet ist, wobei die Tischplatte (6) an der Linearführung (52.1, 52.2) festgelegt ist.

3. Prüftisch nach einem der vorangegangenen Ansprüche, wobei der Hubtisch als Scherenhubtisch (4) mit wenigstens zwei beiderseits drehbar gelagerten und je einerseits axial beweglich gelagerten Schenkelpaaren (8.1, 8.2, 10.1, 10.2) ausgebildet ist, wobei die Schenkelpaare (8.1, 8.2, 10.1, 10.2) mittels wenigstens eines Lagers (11.1, 11.2) miteinander verbunden sind.

4. Prüftisch nach einem der vorangegangenen Ansprüche, wobei das Hebezeug ein Zughebezeug (12) ist, das einen Manipulator (14) aufweist, der knick- und/oder schwenkbar ist.

5. Prüftisch nach einem der Ansprüche 1 bis 4, wobei das Hebezeug (12) an einem Rahmen (22, 26) angeordnet ist, der an der Tragestruktur (38) festgelegt ist, wobei der Rahmen (22, 26) den Hubtisch (4) zumindest teilweise einrahmt.

6. Prüftisch nach Anspruch 5, wobei ein Antrieb (58, 60) für den Hubtisch (4) vorgesehen ist, der einerseits an dem Rahmen (22) festgelegt ist und andererseits an einem höhenverstellbaren Teil (54) des Hubtisches (4).

7. Prüftisch nach einem der vorangegangenen Ansprüche, wobei an der Basis eine Vermessungseinrichtung zur Vermessung der Position des Hubtisches (4) angeordnet ist.

8. Prüfstand zur Zertifizierung von Crashtest-Dummys (72) mit einem Prüftisch (2) nach einem der vorangegangenen Ansprüche und einem Pendel (74) zur Durchführung von Pendeltests an auf der Prüftisch (2) angeordneten Crashtest-Dummys (72).

## Claims

1. A test table for the certification crash case dummies, with a lifting table (4), which comprises a height-adjustable table top (6), on which a crash test dummy (72) is positioned to carry out certification tests, wherein the table top (6) can be horizontally adjusted on the lifting table (4) in order to position the crash test dummy (72) relative to a reference point (R), wherein the test table (2) comprises a lifting gear (12) for lifting objects (72) onto the table top (6), wherein the lifting table (4) acts as a counterweight for the lifting gear (12), **characterized in that** a support structure (38) is provided, on which the lifting table (4) and the lifting gear (12) are attached, wherein the support structure (38) is mounted in a linearly adjustable manner on a base (40), which can be arranged in a stationary manner.

2. The test table according to Claim 1, wherein the lifting table (4) has a rotary mechanism (50), the rotational axis (Z) of which is vertically aligned, wherein a horizontally aligned linear guide (52.1, 52.2) is arranged on the rotary mechanism (50), wherein the table top (6) is fixed on the linear guide (52.1, 52.2).

3. The test table according to one of the preceding claims, wherein the lifting table is designed as a scissor-type lifting table (4) with at least two limb pairs (8.1, 8.2, 10.1, 10.2) rotatably mounted on both sides and mounted in an axially moveable manner on one side respectively, wherein the limb pairs (8.1, 8.2, 10.1, 10.2) are connected to each other by means of at least one bearing (11.1, 11.2).

4. The test table according to one of the preceding claims, wherein the lifting gear is a is a hoist (12) which comprises a manipulator (14) which is bent and/or swivelled.

5. The test table according to any one of Claims 1 to 4, wherein the lifting gear (12) is arranged on a frame (22, 26) which is fixed on the support structure (38), wherein the frame (22, 26) at least partially frames the lifting table (4).

6. The test table according to Claim 5, wherein a drive (58, 60) is provided for the lifting table (4), which, on the one hand, is fixed on the frame (22) and, on the other hand, on a height-adjustable part (54) of the lifting table (4).

7. The test table according to one of the preceding claims, wherein, a measuring device is arranged on the base for measuring the position of the lifting table (4) .

8. The test bench for the certification of crash test dummies (72) with a test table (2) according to one of the preceding claims and a pendulum (74) for carrying out pendulum tests on crash test dummies (72) arranged on the test table (2).

## Revendications

1. Table d'essai pour la certification de mannequins de crash-test, avec une table de levage (4) présentant un plateau de table (6) réglable en hauteur, sur laquelle un mannequin de crash-test (72) peut être positionné pour l'exécution d'essais de certification, dans laquelle le plateau de table (6) est réglable horizontalement sur la table de levage (4), pour positionner le mannequin de crash-test (72) par rapport à un point de référence (R), dans laquelle la table d'essai (2) présente un outil de levage (12) permettant de lever des objets (72) sur le plateau de table (6), dans laquelle la table de levage (4) constitue un contrepoids pour l'outil de levage (12), **caractérisée en ce qu'**il est prévu une structure de support (38) sur laquelle sont fixés la table de levage (4) et l'outil de levage (12), dans laquelle la structure de support (38) est montée de façon réglable linéairement sur une base (40) apte à être installée fixement.

2. Table d'essai selon la revendication 1, dans laquelle la table de levage (4) présente un dispositif de rotation (50) dont l'axe de rotation (Z) est orienté verticalement, dans laquelle un guidage linéaire (52.1, 52.2) orienté horizontalement est disposé sur le dispositif de rotation (50), dans laquelle le plateau de table (6) est fixé sur le guidage linéaire (52.1, 52.2).

3. Table d'essai selon l'une des revendications précédentes, dans laquelle la table de levage est conçue comme une table de levage à ciseaux (4) avec au moins deux paires de branches (8.1, 8.2, 10.1, 10.2) montées de façon axialement mobile respectivement d'un côté et de façon rotative des deux côtés, dans laquelle les paires de branches (8.1, 8.2, 10.1, 10.2) sont reliées entre elles à l'aide d'au moins un palier (11.1, 11.2).

4. Table d'essai selon l'une des revendications précédentes, dans laquelle l'outil de levage est un outil de levage à traction (12), lequel présente un manipulateur (14) pliable et/ou pivotant.

5. Table d'essai selon l'une des revendications 1 à 4, dans laquelle l'outil de levage (12) est disposé sur un cadre (22, 26) fixé sur la structure de support (38), dans laquelle le cadre (22, 26) encadre au moins partiellement la table de levage (4).

6. Table d'essai selon la revendication 5, dans laquelle il est prévu un entraînement (58, 60) pour la table de levage (4), lequel est fixé d'une part au cadre (22) et d'autre part à une partie réglable en hauteur (54) de la table de levage (4).

7. Table d'essai selon l'une des revendications précédentes, dans laquelle un système de mesurage est disposé sur la base pour le mesurage de la position de la table de levage (4).

8. Banc d'essai pour la certification de mannequin de crash-test (72), avec une table d'essai (2) selon l'une des revendications précédentes et un balancier (74) pour l'exécution de tests d'oscillation sur des mannequins de crash-test (72) placés sur la table d'essai (2).
